# EUROPEAN PATENT APPLICATION

(11) **EP 3 012 719 A1**
(43) Date of publication of application: **27.04.2016**
(21) Application number: 15190625.2
(22) Date of filing: 20.10.2015
(51) Int. Cl.: G06F 3/041, H04M 1/725, H04B 1/3888

(54) **DISPLAY CONTROL METHOD AND PROTECTIVE COVER IN ELECTRONIC DEVICE**

(30) Priority: 20.10.2014 KR 20140141468
(71) Applicant: Samsung Electronics Co., Ltd., Gyeonggi-do 16677 (KR)
(72) Inventor: Lee, Baekdoosan, 16677 Suwon-si (KR)
(74) Representative: Nederlandsch Octrooibureau

(57) **Abstract**

An input control method and an electronic device are provided. The electronic device includes a display, a memory for storing data, and a processor functionally connected to the display and the memory. The processor detects a first input, determines whether a cover for the electronic device covers the display based on the first input, wherein the cover includes a first visual region and a second visual region, and displays first data corresponding to the first input through at least one of a first region and a second region of the display when the cover covers the display, wherein the first region is arranged in a location corresponding to the first visual region and the second region is arranged in a location corresponding to the second visual region.

## Description

### BACKGROUND

### 1. Field of the Disclosure

The present disclosure relates generally to a display control method and apparatus in an electronic device, and more particularly to a display control method in an electronic device including a protective cover.

### 2. Description of the Related Art

Recently, as electronic technology has rapidly developed, portable electronic devices have become widespread. The portable electronic devices are being used in a variety of fields, including smartphones, tablet computers, electronic dictionaries, digital cameras, notebook computers, and MP3 players.

Owing to advances in electronics, an input method of an electronic device has evolved into various forms. The input method of the electronic device has been developed from the most basic key input scheme into various input schemes, such as touch input, touch and drag input, pinch input, electronic pen-based input, hovering input, etc. Such various input schemes used in the electronic device have been more rapidly applied to portable electronic devices than to general home appliances.

Since a portable electronic device is carried by a user, scratches may be generated on the outer surface or a Liquid Crystal Display (LCD) of the electronic device. To solve this problem, protective covers have been increasingly used in portable electronic devices.

If a protective cover is used in an electronic device, input by a user may be disrupted by the protective cover. In more detail, a protective cover used to protect the LCD or outer case of an electronic device such as a touchscreen smartphone or cellular phone is usually a flip cover type. If the flip cover is closed, since the lid hides at least a part of the LCD (or display), the user needs to operate the electronic device after opening the cover in order to perform an input operation on the electronic device.

To overcome the above problem, some electronic devices are equipped with a transparent window on a portion of the protective cover to provide specific preset information, for example, date information or battery level information, through the transparent window. In addition, when a call is incoming, a smartphone or a cellular phone may provide a function capable of recognizing touch input so that the user can receive a phone call.

However, since these functions represent just a subset of the multiple functions available in the electronic device, the protective cover may still inconvenience the user. As an example, the user must still open the protective cover in order to search for phone numbers, receive/transmit a text message, or attempt to make a phone call using the smartphone or cellular phone. As another example, when the user performs any function using the electronic device while holding an object in one hand, the protective cover may cause the user considerable inconvenience.

### SUMMARY

The present disclosure has been made to address at least the problems and the disadvantages described above, and to provide at least the advantages described below.

Accordingly, an aspect of the present disclosure is to provide an input method and apparatus, such as a protective cover, capable of using various functions in an electronic device including the protective cover.

Accordingly, another aspect of the present disclosure is to provide an input method and apparatus, such as a protective cover, capable of increasing user convenience in using an electronic device including the protective cover.

Accordingly, another aspect of the present disclosure is to provide an input method and apparatus, such as a protective cover, capable of reducing consumption of battery power in an electronic device including the protective cover.

In accordance with an aspect of the present disclosure, an electronic device is provided. The electronic device includes a display, a memory for storing data, and a processor functionally connected to the display and the memory. The processor detects a first input, determines whether a cover for the electronic device covers the display based on the first input, wherein the cover includes a first visual region and a second visual region, and displays first data corresponding to the first input through at least one of a first region and a second region of the display when the cover covers the display, wherein the first region is arranged in a location corresponding to the first visual region and the second region is arranged in a location corresponding to the second visual region.

In accordance with another aspect of the present disclosure, a display control method in an electronic device including a cover is provided. The control method includes determining whether the cover covers a display of the electronic device upon detecting a first input, and displaying first data corresponding to the first input through at least one of a first region of the display corresponding to a first visual region of the cover and a second region of the display corresponding to a second visual region of the cover when the cover covers the display.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 illustrates a network environment including an electronic device, according to an embodiment of the present disclosure;
FIG. 2 is a block diagram of an electronic device, according to an embodiment of the present disclosure;
FIG. 3 is a flowchart illustrating a control operation in a state in which a protective cover of an electronic device is closed, according to an embodiment of the present disclosure;
FIG. 4 illustrates an electronic device , according to an embodiment of the present disclosure;
FIG. 5 illustrates an electronic device including a protective cover in an open state, according to an embodiment of the present disclosure;
FIG. 6 illustrates an electronic device including a protective cover in a state in which data is displayed in a first region of a display of the electronic device, according to an embodiment of the present disclosure;
FIG. 7 illustrates a method of receiving a second input in an electronic device including a protective cover, according to an embodiment of the present disclosure; and
FIGs. 8 and 9 illustrate a method of operating an electronic device including a protective cover in a state in which a second region of a display is activated when the protective cover is closed, according to an embodiment of the present disclosure.

### DETAILED DESCRIPTION OF EMBODIMENTS OF THE PRESENT

### DISCLOSURE

Hereinafter, the present disclosure will be described with reference to the accompanying drawings. The present disclosure may have various modifications and embodiments and thus will be described in detail with reference to specific embodiments illustrated in the drawings. However, it should be understood that there is no intent to limit the present disclosure to the particular forms disclosed and the present disclosure covers all modifications, equivalents, and/or alternatives falling within the scope of the disclosure. In connection with descriptions of the drawings, similar components are designated by the same reference numeral.

The expressions such as "include" and "may include" are used in the present disclosure to refer to the presence of the disclosed functions, operations, and constituent elements and do not limit one or more additional functions, operations, and constituent elements. In the present disclosure, the terms s "include" and/or "have" refer to a certain characteristic, number, step, operation, constituent element, component or a combination thereof, but should not be construed to exclude the existence of or a possibility of an addition of one or more other characteristics, numbers, steps, operations, constituent elements, components or combinations thereof.

Furthermore, in the present disclosure, the expression "and/or" includes any and all combinations of the associated listed words. For example, the expression "A and/or B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from other elements. For example, a first user device and a second user device indicate different user devices although both are user devices. For example, a first element may be referred to as a second element, and similarly, a second element may be referred to as a first element without departing from the scope of the present disclosure.

Where a component is referred to as being "connected" to or "accessed" by another component, it should be understood that the component may be directly connected to or accessed by the other component, or there may exist another component between the two components. Meanwhile, in the case where a component is referred to as being "directly connected" to or "directly accessed" by another component, it should be understood that there exists no component between the two components. The terms used in the present disclosure are only used to describe specific various embodiments, and are not intended to limit the present disclosure. As used herein, the singular forms are intended to include the plural forms as well, unless the context clearly indicates otherwise. Singular forms are intended to include plural forms unless the context clearly indicates otherwise.

Unless defined otherwise, all terms used herein, including technical and scientific terms, have the same meaning as commonly understood by those of skill in the art to which the present disclosure pertains. Such terms as those defined in a generally used dictionary are to be interpreted to have meanings equivalent to the contextual meanings in the relevant art, and are not to be interpreted as having ideal or excessively formal meanings unless clearly defined in the present disclosure.

An electronic device, according to the present disclosure, may be a device including a communication function. For example, the electronic device may correspond to at least one of a smartphone, a tablet Personal Computer (PC), a mobile phone, a video phone , an e-book reader, a desktop PC, a laptop PC, a netbook computer, a Personal Digital Assistant (PDA), a Portable Multimedia Player (PMP), a digital audio player, a mobile medical device, an electronic bracelet, an electronic necklace, an electronic accessory, a camera, a wearable device, an electronic clock, a smart watch, home appliances (for example, an air-conditioner, vacuum, an oven, a microwave, a washing machine, an air cleaner, and the like), an artificial intelligence robot, a television (TV), a Digital Versatile Disk (DVD) player, an audio device, various medical devices (for example, Magnetic Resonance Angiography (MRA), Magnetic Resonance Imaging (MRI), Computed Tomography (CT), a scanning machine, a ultrasonic wave device, etc.), a navigation device, a Global Positioning System (GPS) receiver, an Event Data Recorder (EDR), a Flight Data Recorder (FDR), a set-top box, a TV box (for example, Samsung HomeSync™, Apple TV™, or Google TV™), an electronic dictionary, vehicle infotainment device, an electronic equipment for a ship (for example, navigation equipment for a ship, gyrocompass, or the like), avionics, a security device, electronic clothes, an electronic key, a camcorder, game consoles, a Head-Mounted Display (HMD), a flat panel display device, an electronic frame, an electronic album, furniture or a portion of a building/structure that includes a communication function, an electronic board, an electronic signature receiving device, a projector, etc. It should be obvious to those skilled in the art that the electronic device, according to the present disclosure, is not limited to the aforementioned devices.

Hereinafter, an electronic device, according to various embodiments of the present disclosure, will be described with reference to the accompanying drawings. The term "user" used herein may refer to a person who uses electronic devices or a device (e.g., an artificial intelligence electronic device) that uses electronic devices.

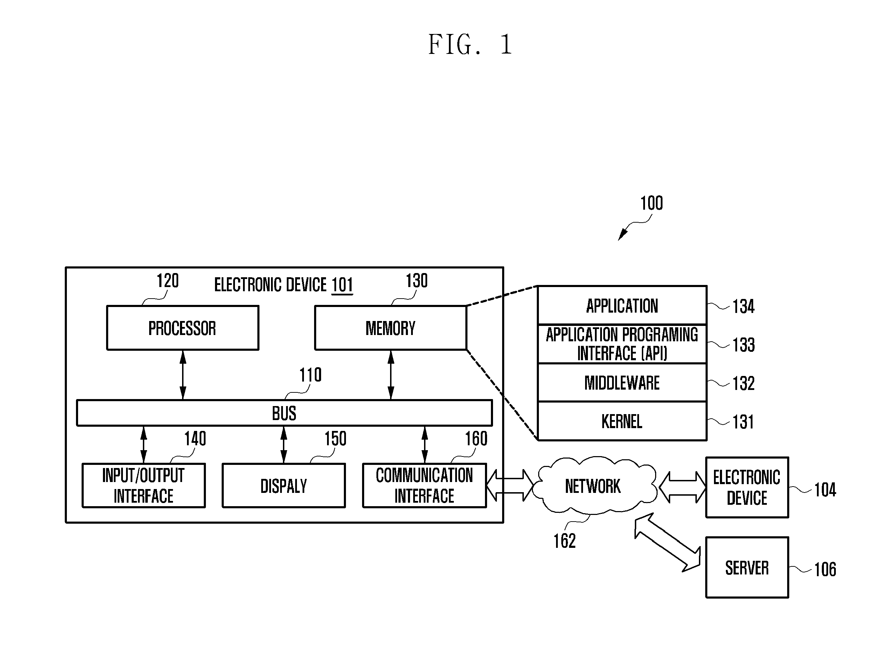

FIG. 1 illustrates a network environment including an electronic device, according to an embodiment of the present disclosure.

Referring to FIG. 1, a network environment 100 including an electronic device 101, a network 162, an external electronic device 104, and a server 106 is provided. The electronic device 101 includes a bus 110, a processor 120, a memory 130, an input/output interface 140, a display 150, and a communication interface 160.

The bus 110 is a circuit which interconnects the above-described components of the electronic device 101 and delivers a communication message (e.g., a control message) between the above-described components.

The processor 120 receives commands from the above-described other components (e.g., the memory 130, the input/output interface 140, the display 150, and the communication interface 160) through the bus 110, interprets the received commands, and executes a calculation or data processing according to the interpreted commands. In addition, the processor 120 may process at least a portion of information acquired from the other components (e.g., the processor 120, the memory 130, an application 134, an input/output interface 140, and the communication interface 160) and provide the processed information to the user in various manners. For example, the processor 120 may recognize information about connection components (e.g., a protective cover) included in the electronic device 101, store the information about the connection components in the memory 130, and execute an application 134 based on the information about the connection components.

In some embodiments, the processor 120 may sense whether the protective cover is closed or opened and control an activation operation of a first region or a second region of a display 150 when the protective cover is closed. The memory 130 stores commands or data received from the processor 120 or the other components (e.g., the input/output interface 140, the display 150, and the communication interface 160) or generated by the processor 120 or the other components. The memory 130 may include programming modules, such as a kernel 131, a middleware 132, an Application Programming Interface (API), and the application 134. Each of the above-described programming modules may be implemented in software, firmware, hardware, or a combination of two or more thereof.

The kernel 131 controls or manages system resources (e.g., the bus 110, the processor 120, the memory 130, etc.) used to execute operations or functions implemented by the other programming modules (e.g., the middleware 132, the API 133, and the application 134). Also, the kernel 131 may provide an interface capable of accessing and controlling or managing the individual components of the electronic device 101 by using the middleware 132, the API 133, or the application 134.

The middleware 132 serves as an intermediary between the API 133 or the application 134 and the kernel 131 such that the API 133 or the application 134 communicates with the kernel 131 and exchanges data therewith. Also, in relation to work requests received from one or more application 134 and/or the middleware 132 may perform load balancing of the work requests by using a method of assigning a priority, in which system resources (e.g., the bus 110, the processor 120, the memory 130, etc.) of the electronic device 101 can be used, to at least one of the one or more application 134.

The API 133 is an interface through which the application 134 is capable of controlling a function provided by the kernel 131 or the middleware 132, and may include, for example, at least one interface or function for file control, window control, image processing, character control, or the like.

According to various embodiments, the application 134 may include, for example, a phone call related application, a Short Message Service (SMS)/Multimedia Message Service (MMS) application, an electronic mail (e-mail) application, a calendar application, an alarm application, a healthcare application (e.g., an application configured to measure an amount of exercise or a blood sugar level), or an environment information application (e.g., an application configured to provide atmospheric pressure, moisture, or temperature information). Additionally or alternatively, the application 134 may include an application related to information exchange between the electronic device 101 and the external electronic device 104. For example, the application related to information exchange may include a notification relay application configured to relay specific information to the external electronic device 104 or a device management application configured to manage the external electronic device 104.

The notification relay application includes a function of relaying notification information generated in the other applications of the electronic device 101 (e.g., the SMS/MMS application, the e-mail application, the healthcare application, or the environmental information application) to the external electronic device 104. Additionally or alternatively, the alarm relay application may receive notification information from the external electronic device 104 and provide the notification information to the user.

The device management application manages (e.g., installs, deletes, or updates) at least some functions of the external electronic device 104 which communicates with the electronic device 101 (e.g., to turn-on/turn-off of the external electronic device 104 itself (or some components thereof) or control a brightness (or resolution) of the display of the external electronic device 104), an application operating in the external electronic device 104, or a service provided from the external electronic device 104 (e.g., a phone call service or a text message service).

According to various embodiments, the application 134 may include an application designated according to a property (e.g., a type of the electronic device) of the external electronic device 104. For example, when the external electronic device 104 is an MP3 player, the application 134 includes an application related to music playback. Similarly, when the external electronic device 104 is a mobile medical device, the application 134 may include an application related to healthcare. The application 134 may include at least one of an application designated for the electronic device 101 or an application received from the external electronic device 104 or the server 106.

The input/output interface 140 delivers a command or data input from a user via an input/output device (e.g., a sensor, a keyboard, a touchscreen, etc.) to the processor 120, the memory 130, or the communication interface 160 through the bus 110. For example, the input/output interface 140 may provide data about a touch of a user that is input through a touchscreen to the processor 120. In addition, the input/output interface 140 outputs, through an input/output device (e.g., a speaker or a display), commands or data received from the processor 120, the memory 130, or the communication interface 160 through the bus 110. For example, the input/output interface 140 may output voice data processed by the processor 120 to the user through a speaker.

The display 150 displays various types of information (e.g., multimedia data, text data, etc.) thereon so that the user can recognize the information. The display 150 may be implemented to be flexible, according to various embodiments of the present disclosure.

According to an embodiment of the present disclosure, the display 150 performs different operations according to an activation operation of a first region of the display 150 and an activation operation of a second region of the display 150 when a protective cover used in the electronic device 101 is closed. The display 150 performs a normal display operation when a protective cover used in the electronic device 101 is opened. The display 150 is configured to overlap with some portions of the input/output interface 140 in a multilayer form.

For example, input sensors for detecting a touch input (including touch and drag and/or zoom in/out), hovering input, electronic pen input, etc. among components of the input/output interface 140 may be located at an upper end or a lower end of the display 150 or in a middle region of the display 150. In this way, if some portions of the input/output interface 140 are overlapped with the display 150in a multilayer form, the input sensors may detect touch, hovering, electronic pen input, etc. on the display 150 and perform a relevant operation.

As an example of using some portions of the input/output interface 140 in the multilayer form with the display 150, a protective layer for protecting the display 150 and the input/output interface 140 may be provided. The protective layer may be formed of a transparent material. A sensor layer for a touch sensor, a hovering input sensor, an electronic pen input sensor, etc. may be arranged under the protective layer and the display 150 may be arranged under the sensor layer.

The communication interface 160 establishes communication between the electronic device 101 and an external electronic device 104 or the server 106. For example, the communication interface 160 may be connected to the network 162 through wireless communication or wired communication and may communicate with the external electronic device 104 or the server 106.

Wireless communication may include at least one of Wi-Fi, Bluetooth (BT), Near Field Communication (NFC), Global Positioning System (GPS), and cellular communication (e.g., LTE, LTE-A, CDMA, WCDMA, UMTS, WiBro, or GSM).

Wired communication may include, at least one of Universal Serial Bus (USB), High Definition Multimedia Interface (HDMI), Recommended Standard 232 (RS-232), and Plain Old Telephone Service (POTS) communication.

According to an embodiment of the present disclosure, the network 162 may be a telecommunications network. The telecommunications network may include at least one of a computer network, the Internet, the Internet of Things (IoT), and a telephone network.

A protocol (e.g., a transport layer protocol, a data link layer protocol, or a physical layer protocol) for communication between the electronic device 101 and an external electronic device 104 may be supported by at least one of the application 134, the API 133, the middleware 132, the kernel 131, and the communication interface 160.

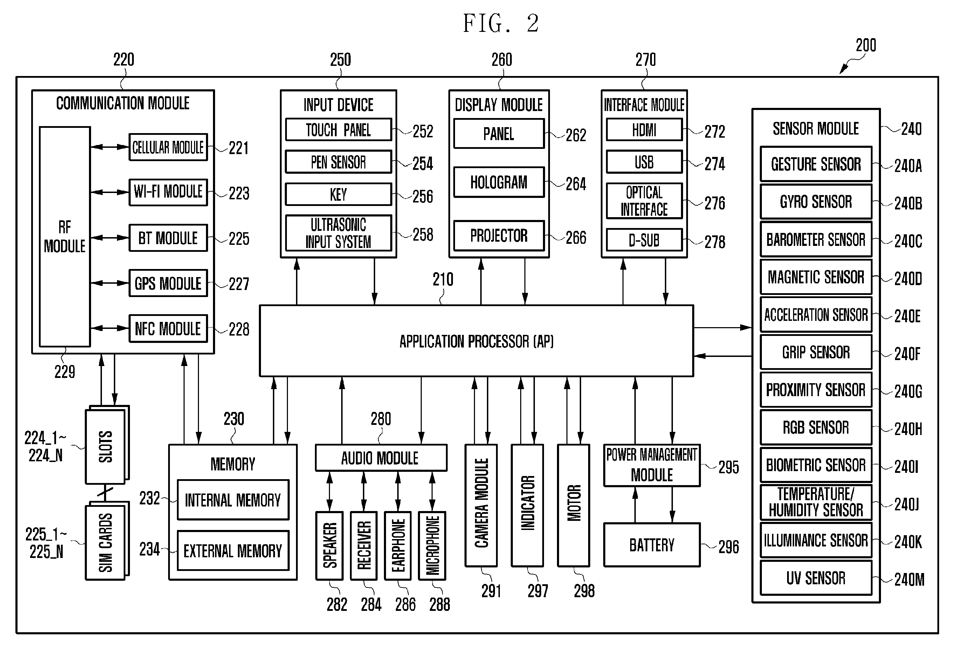

FIG. 2 is a block diagram of an electronic device, according to an embodiment of the present disclosure.
Referring to FIG. 2, an electronic device 200 is provided. The electronic device 200 may constitute all or some of the electronic device 101 illustrated in FIG. 1. The electronic device 200 includes one or more Application Processor (AP) 210, a communication module 220, slots 224_1 to 224_N, Subscriber Identity Module (SIM) cards 225_1 to 225_N, a memory 230, a sensor module 240, an input device 250, a display module 260, an interface module 270, an audio module 280, a camera module 291, a power management module 295, a battery 296, an indicator 297, and a motor 298.

The AP 210 may execute an Operating System (OS) or an application program to thereby control multiple hardware or software elements connected to the AP 210 and perform processing and arithmetic operation on various data including multimedia data. The AP 210 may be implemented by, for example, a System on Chip (SoC). The AP 210 may further include a Graphics Processing Unit (GPU).

According to an embodiment of the present disclosure, the AP 210 senses a closed state or an open state of a protective cover of an electronic device 200 and controls an activation operation of a first region of a display of the electronic device 200 and an activation operation of a second region of a display of the electronic device 200 in the closed state of the protective cover.

The communication module 220 (e.g., communication interface 160) performs data transmission and reception for communication between the electronic device 200 (e.g., the electronic device 101) and another electronic device (e.g., the electronic device 104 or the server 106) connected via a network. The communication module 220 includes a cellular module 221, a Wi-Fi module 223, a Bluetooth (BT) module 225, a GPS module 227, a Near Field Communication (NFC) module 228, and a Radio Frequency (RF) module 229.

The cellular module 221 provides a voice call, video call, text message, or Internet service through a communication network (e.g., LTE, LTE-A, CDMA, WCDMA, UMTS, WiBro, or GSM). The cellular module 221 performs identification and authentication of electronic devices within a communication network using, for example, the SIM cards 225_1 to 225_N. The cellular module 221 performs at least some of functions that can be provided by the application processor 210. For example, the cellular module 221 may perform at least some multimedia control functions.

The cellular module 221 may include a Communication Processor (CP). The cellular module 221 may be implemented by an SoC.

In FIG. 2, the elements such as the cellular module 221 (e.g., the CP), the memory 230, the power management module 295, etc. are illustrated as elements separate from the AP 210. However, the AP 210 may include at least some (e.g., the CP 221) of the above-described elements.

The AP 210 or the cellular module 221 (e.g., a communication processor) loads commands or data received from at least one of a nonvolatile memory connected to the AP 210 or the cellular module 221 and other elements and processes the loaded commands or data. In addition, the AP 210 or the cellular module 221 stores data received from at least one of the other elements or generated by at least one of the other elements in a nonvolatile memory.

Each of the Wi-Fi module 223, the BT module 225, the GPS module 227, and the NFC module 228 may include a processor configured to process data transmitted and received through a corresponding module.

Although the cellular module 221, the Wi-Fi module 223, the BT module 225, the GPS module 227, and the NFC module 228 are illustrated as respective separate blocks in FIG. 2, at least a portion (e.g., two or more modules) of the cellular module 221, the Wi-Fi module 223, the BT module 225, the GPS module 227, and the NFC module 228 may be included in one Integrated Chip (IC) or an IC package. For example, at least a portion of the processors corresponding, respectively, to the cellular module 221, the Wi-Fi module 223, the BT module 225, the GPS module 227, and the NFC module 228 (e.g., a communication processor corresponding to the cellular module 221 and a Wi-Fi processor corresponding to the Wi-Fi module 223) may be implemented by one SoC.

The RF module 229 transmits and receives data, for example, an RF signal. The RF module 229 may include a transceiver, a Power Amplifier Module (PAM), a frequency filter, a Low Noise Amplifier, etc. The RF module 229 may further include a component for transmitting and receiving electromagnetic waves in a free space in wireless communication, for example, a conductor, a conductive wire, etc.

Although the cellular module 221, the Wi-Fi module 223, the BT module 225, the GPS module 227, and the NFC module 228 share one RF module 229 in the illustrated example FIG. 2, at least one of the cellular module 221, the Wi-Fi module 223, the BT module 225, the GPS module 227, and the NFC module 228 may transmit and receive the RF signal through a separate RF module.

The SIM cards 225_1 to 225_N are cards to be inserted into slots 224_1 to 224_N formed in a particular portion of the electronic device 200. The SIM cards 225_1 to 225_N include unique identification information (e.g., Integrated Circuit Card Identifier (ICCID)) or subscriber information (e.g., International Mobile Subscriber Identity (IMSI)).

The memory 230 (e.g., memory 130) may include an internal memory 232 or an external memory 234.

The internal memory 232 may include at least one of a volatile memory (e.g., a Dynamic Random Access Memory (DRAM), a Static RAM (SRAM), a Synchronous Dynamic RAM (SDRAM), etc.) and a non-volatile memory (e.g., a One Time Programmable Read-Only Memory (OTPROM), a Programmable ROM (PRMO), an Erasable and Programmable ROM (EPROM), an Electrically Erasable and Programmable ROM (EEPROM), a mask ROM, a flash ROM, a Negative AND (NAND) flash memory, a Not OR (NOR) flash memory, etc.).

The internal memory 232 may take the form of a Solid State Drive (SSD).

The external memory 234 may include a flash drive (e.g., a Compact Flash (CF), a Secure Digital (SD), a micro-SD, a mini-SD, an extreme digital (xD), a memory stick, etc.). The external memory 234 may be functionally connected to the electronic device 200 through various interfaces.

The electronic device 200 may further include a storage device (or a storage medium) such as a hard drive.

The sensor module 240 measures a physical quantity and/or senses an operating state of the electronic device 200 to convert the measured or sensed information into an electrical signal. The sensor module 240 may include at least one of a gesture sensor 240A, a gyro sensor 240B, an atmospheric pressure (barometer) sensor 240C, a magnetic sensor 240D, an acceleration sensor 240E, a grip sensor 240F, a proximity sensor 240G, a color (e.g., Red, Green, Blue (RGB)) sensor 240H, a biometric sensor 240I, a temperature/humidity sensor 240J, an illuminance sensor 240K, and an ultraviolet (UV) sensor 240M. Additionally or alternatively, the sensor module 240 may include an E-nose, an electromyography (EMG) sensor, an electroencephalogram (EEG) sensor, an electrocardiogram (ECG) sensor, an Infrared (IR) sensor, an iris sensor, a fingerprint sensor, and/or the like. The sensor module 240 may further include a control circuit for controlling one or more sensors included therein.

The input device 250 may include a touch panel 252, a (digital) pen sensor 254, keys 256, and an ultrasonic input unit 258. The touch panel 252 recognizes touch input using at least one of, a capacitive scheme, a resistive scheme, an infrared scheme, and an acoustic wave scheme, etc. In addition, the touch panel 252 may further include a controller. In the capacitive type, the touch panel 252 is capable of recognizing proximity as well as a direct touch. The touch panel 252 may further include a tactile layer. In this event, the touch panel 252 provides a tactile response to the user.

The (digital) pen sensor 254 may be implemented using a method identical or similar to a method for receiving a touch input from the user or by using a separate sheet for recognition.

The keys 256 may include physical buttons, optical keys, or a keypad.

The ultrasonic input unit 258 enables the electronic device 200 to sense a sound wave by using a microphone 288 through an input tool generating an ultrasonic signal and to identify data. The ultrasonic input device 258 is capable of performing wireless recognition.

The electronic device 200 may receive user input, through the communication module 220, from an external device (e.g., external electronic device 104 or server 106) which is connected to the communication module 220.

The display module 260 (e.g., display 150) may include a panel 262, a hologram 264, and a projector, 266.

The panel 262 may be a Liquid Crystal Display (LCD), am Active Matrix Organic Light Emitting Diode (AMOLED), etc. The panel 262 may be implemented to be flexible, transparent, or wearable. The panel 262 may be integrated with the touch panel to be configured as one module.

The hologram 264 displays a three-dimensional image in the air by using an interference of light.

The projector 266 projects light to a screen to display an image. For example, the screen may be positioned inside or outside the electronic device 200.

The display module 260 may further include a control circuit for controlling the panel 262, the hologram 264, or the projector 266.

According to an embodiment of the present disclosure, when the electronic device 200 uses a protective cover, the display module 260 performs different operations based on the shape of the protective cover in a state in which the protective cover is closed, whether data is displayed on a screen or a region of the screen. For example, the display module 260 may activate only a partial region of a screen corresponding to a region through which light of the protective cover can pass or may display data in a state in which the protective cover is closed. The display module 260 may display data on a screen based on a user input in a state in which the protective cover of the electronic device 200 is closed. For example, if a first input by the user is detected, the display module 260 displays data in a first region, which is a portion of a screen of the electronic device 200. If a second input by the user is detected in a state in which data is displayed in the first region, the display module 260 displays data in a second region, which is a portion of the screen of the electronic device 200. If the electronic device 200 uses the protective cover, the display module 260 performs a normal display operation in a state in which the protective cover is opened. The display module 260 may be configured in an overlapped (multilayer) form with some components of the input device 250. For example, input sensors for touch input (including touch and drag, zoom in/out), hovering input, electronic pen, etc., among components of the input device 250, may be positioned at an upper end or a lower end of the display module 260 or in a middle region of the display module 260. In this way, if a portion of the input device 250 overlaps the display module 260, the input sensors detect a touch, hovering, electronic pen input, etc. on the display module 260 and perform a relevant operation. The interface module 270 may include a High-Definition Multimedia Interface (HDMI) module 272, a Universal Serial Bus (USB) module 274, an optical interface module 276, a D-subminiature (D-SUB) module 278, and/or the like. The interface module 270 may be included in the communication interface 160 illustrated in FIG. 1. Additionally or alternatively, the interface module 270 may include, for example, a Mobile High-definition Link (MHL) interface, a Secure Digital (SD) card/Multimedia Card (MMC) interface, or Infrared Data Association (IrDA) interface.

The audio module 280 encodes/decodes sound signals into electric signals and vice versa. At least some components of the audio module 280 may be included in the input/output interface 140 illustrated in FIG. 1. The audio module 280 processes sound information that is input in or output from a speaker 282, a receiver 284, an earphone 286, and/or a microphone 288.

The camera module 291 captures still images and/or video. The camera module 291 may include one or more image sensors (e.g., front sensor or rear sensor), lens , an Image Signal Processor (ISP), or a flash (e.g., an LED or xenon lamp).

The power management module 295 manages electrical power of the electronic device 200. Although not shown, the power management module 295 may include, for example, a Power Management Integrated Circuit (PMIC), a charger Integrated Circuit (IC), a battery gauge, etc.

The PMIC may be disposed in, for example, an IC or an SoC semiconductor. The charging method may include wired and wireless charging. The charger IC may charge a battery and prevent excessive voltage or excessive current induced from a charger. The charger IC may include at least one of a wired charger IC and a wireless charger IC. The wireless charger IC may be a magnetic resonance type, a magnetic induction type, or an electromagnetic wave type and may include an additional circuit, for example, a coil loop, a resonance circuit, or a rectifier.

The battery gauge measures a charge level, voltage, current, or temperature of the battery 296 during charging.

The battery 296 stores or generates electricity and supplies power to the electronic device 200 by using the stored or generated electricity. The battery 296 may include, for example, a rechargeable battery or a solar cell.

The indicator 297 indicates a specific state, for example, a boot status, a message status, and/or a charge status of the electronic device 200 or a portion of the electronic device 200 (e.g., the AP 210). The motor 298 converts an electrical signal into a mechanical vibration.

The electronic device 200 may include a processing unit (e.g., GPU) for mobile TV support. The processing unit for mobile TV support processes media data according to standards, such as Digital Multimedia Broadcasting (DMB), Digital Video Broadcasting (DVB), media flow, etc.

Each of the above-described elements of the electronic device 200 may include one or more components and the name of the relevant element may be changed depending on the type of the electronic device.

The electronic device, according to an embodiment the present disclosure, may include at least one of the above-described elements. Some of the above-described elements may be omitted from the electronic device or the electronic device may further include additional elements. In addition, some of the elements of the electronic device may be combined into one entity, which may perform functions identical to those of the relevant elements before combination.

The term "module" used herein may refer to, for example, a unit including one or more combinations of hardware, software, and firmware. The term "module" may be interchangeable with a term, such as "unit," "logic," "logical block," "component," "circuit," etc. The "module" may be a minimum unit of a component formed as one body or a part thereof. The "module" may be a minimum unit for performing one or more functions or a part thereof. The "module" may be implemented mechanically or electronically. For example, the "module" may include at least one of an Application-Specific Integrated Circuit (ASIC) chip, a Field-Programmable Gate Array (FPGA), and a programmable-logic device for performing certain operations which have been known or are to be developed in the future.

An electronic device, according to an embodiment of the present disclosure, includes a display, a memory for storing data to be displayed on the display, and a processor functionally connected to the display and the memory. The processor acquires input for the electronic device, determines whether a cover for the electronic device is placed on or over the display based on the input, the cover including a first visual region and a second visual region, and displays data corresponding to the input through at least one of a first region and a second region of the display when the cover is placed on or over the display, wherein the first region corresponds to the first visual region and the second region corresponds to the second visual region.

According to an embodiment of the present disclosure, the first display region may be a transparent region and the second display region may be a translucent region.

According to an embodiment of the present disclosure, the processor controls activating an input/output interface for further acquiring another input upon displaying the data on the display.

According to an embodiment of the present disclosure, the processor controls displaying data based on another acquired input in the second region of the display upon further acquiring another input.

According to an embodiment of the present disclosure, the processor controls displaying information corresponding to selected data in the first region when at least one of the data items displayed in the second region is selected.

According to an embodiment of the present disclosure, the other input may be input using at least one of: touch, hovering, a pen, and touch and drag.

According to an embodiment of the present disclosure, the processor controls activating the first region of the display upon displaying the data corresponding to the input in the first region.

According to an embodiment of the present disclosure, the processor changes and then displays the data displayed in the second region upon detecting a screen transition input in a state in which the data corresponding to the input is displayed in the second region.

According to an embodiment of the present disclosure, the data displayed in the second region may include at least one of display data for an outgoing call operation, display data for a text message transmission operation, display data for a phone number search operation, display data for a text message confirmation operation, display data for a scheduling management operation, and display data for an application execution icon or note input operation.

According to an embodiment of the present disclosure, the processor controls deactivating the display when detecting no input during a preset time period in a state in which the data is displayed in the second region of the display.

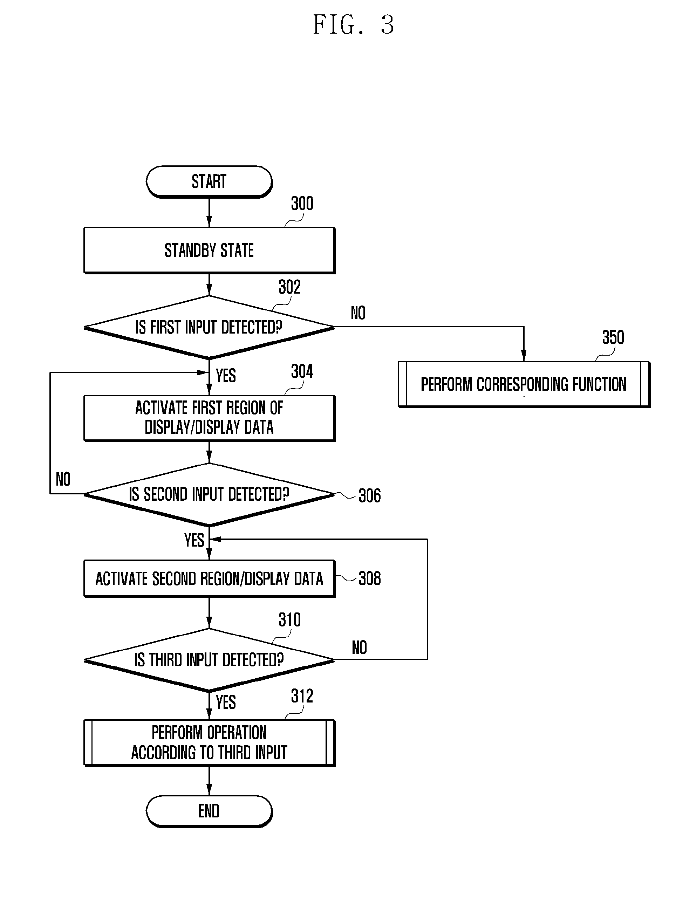

FIG. 3 is a flowchart illustrating a control operation in a state in which a protective cover of an electronic device is closed, according to an embodiment of the present disclosure.

Referring to FIG. 3, the above-described block configuration of FIG. 1 will mainly be used to describe the figure. When needed, the configuration of FIG. 2 may be used for description. Even if the electronic device has the block configuration of FIG. 2, it should be apparent that the electronic device may operate in the same manner as the case in which the electronic device has the block configuration of FIG. 1. Additionally, it is assumed that the display 150 is configured in a form capable of detecting at least one of a touch input (including touch and drag and/or pinch input for zoom in/out), hovering input, and electronic pen input, and includes some components of the input/output interface 140.

The electronic device 101 includes a protective cover. The flow of the control operation shown in FIG. 3 is performed when the protective cover of the electronic device 101 is closed. Accordingly, if the electronic device 101 does not include a protective cover or the protective cover is not closed, the electronic device 101 may perform an operation different from the control operation of FIG. 3. In step 300, the processor 120 of the electronic device 101 recognizes that the electronic device 101 is in a stand-by state and that the protective cover is closed. The standby state is a state in which only the most basic operation of the electronic device 101 is performed. For example, when the electronic device 101 is a cellular phone or a smartphone, the standby state is a state in which the electronic device 101 causes the display 150 to be in an deactivation state, periodically operates to confirm an incoming call or an incoming text message, or waits for a specific user input.

In step 302, when a specific event occurs, the processor 120 checks whether the specific event is a first input. The first input may be an operation of requesting activation of a first region, which is a portion of the display 150 of the electronic device 101, or a display of data in the first region. That is, the area of the display 150 of the electronic device 101 on which data can be displayed may be divided into two or more regions. The divided regions are referred to as a first region, a second region, etc. The first region of the display 150 may be positioned in various locations on the display 150 as needed. The processor 120 may independently activate and deactivate the respective regions of the display 150. Alternatively or additionally, the processor 120 may activate the entire area of the display 150 and display data only in some regions of the display 150.

As the result of step 302, if the event is the first input, the processor 120 proceeds to step 304 and, if the event is not the first input, the processor 120 proceeds to step 305.

If the processor 120 proceeds to step 305, the processor 120 performs an operation corresponding to the event. For example, the processor 120 may perform operations corresponding to various events including an event for opening the closed protective cover, a call incoming event, a text message incoming event, an alarm time generation event, etc.

If the processor 120 proceeds to step 304, since the protective cover is closed, the processor 120 controls activating the first region of the display 150 or displays data in the first region of the display 150.

The activation of the first region of the display 150 indicates a state in which only a specific region is activated when the protective cover of the electronic device 101 is closed. If data to be displayed is provided to the user by activating only the first region of the display 150, sensors may be driven so that at least one of a touch input, hovering input, and electric pen input is detected, as described above. Alternatively, if data to be displayed is provided to the user by activating the first region of the display 150, sensors may be driven so as to detect input in the first region and the sensors may also be driven in the second region of the display 150.

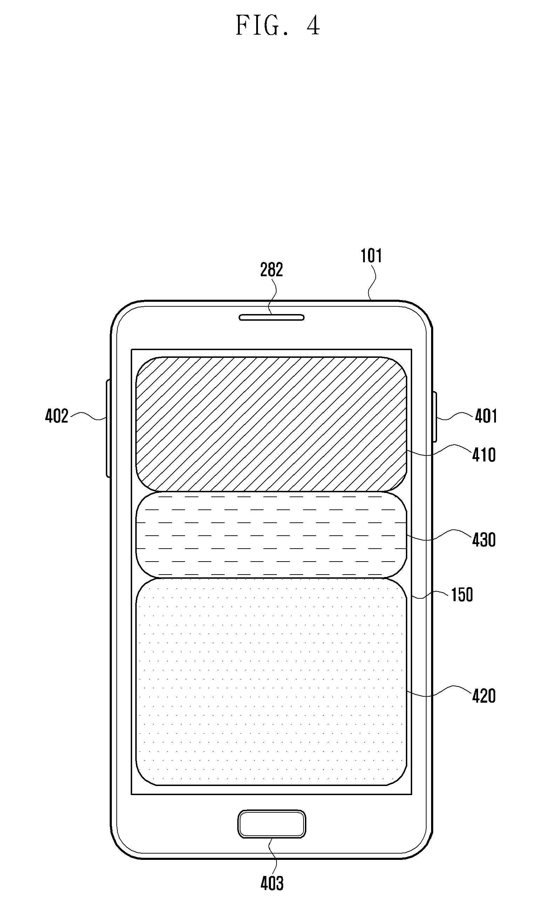

This will be described with reference to FIGS. 4 to 7.

FIG. 4 illustrates an electronic device, according to an embodiment of the present disclosure.

Referring to FIG. 4, as viewed from the front side of the electronic device 101, when a protective cover is not included on the electronic device 101, the front side of the electronic device 101 includes the display 150, the speaker 282, a power key 401 located at the right upper part of the electronic device 101, a volume control key 402 located at the left upper part of the electronic device 101, and a home key 403 located at the lower part of the display 150. FIG. 4 is provided merely to explain the present disclosure and it should be noted that the above-described components shown in FIG. 4 are not necessarily required. The power key 401, the volume control key 402, and/or the home key 403 are added as merely for convenience of description. Accordingly, the power key 401, the volume control key 402, and the home key 403 may be mapped to operations different from those described herein and may serve as multiple keys for performing two or more functions. In addition, other keys may be added to specific locations of the rear side of the electronic device 101. Further, the electronic device 101 may be configured not to include keys that protrude to the exterior.

The display 150 may include at least two different regions, as shown in FIG. 4. For example, the display 150 may be divided into a first region 410 indicated by oblique lines and a second region 420 indicated by dotted lines. The second region 420 may be the remaining area of the display 150 other than the first region 410, or, as shown in FIG. 4, the second region 420 may be a portion of the remaining area of the display 150 other than the first region 410. In this case, the display 150 may include a third region 430 indicated by dashed lines, as shown in FIG. 4.

Although in FIG. 4 the display 150 is divided into three regions, the display 150 may be divided into various other forms, for example, only two regions or four or more regions.

The display 150 may have an overlapped (multilayer) form with a portion of the input/output interface 140.

In the first region 410, the second region 420, and the third region 430 of the display 150, input sensors of the input/output interface 140 may be partially activated/deactivated in response to an operation of a standby state, an operation of an activation state of the first region 410, an operation of an activation of the second region 420, an operation of an activation state of the first region 410 and the second region 420, or an operation of an activation state of the entire area of the display 150.

The operation of the standby state may be an operation of deactivating at least a portion of the input sensors of the input/output interface 140 overlapped with the display 150.

The operation of the activation state of the first region 410 may be an operation of activating only the first region 410 of the display 150 to display data only in the first region 410. For example, in the activation state of the first region 410, the input sensors of the input/output interface 140 may activate only the first region 410 of the display 150 to display data in the first region 410, or may activate the first region 410 and the second region 420 to display data in the first region 410or may activate the entire area of the display 150 or all the input sensors of the input/output interface 140 to display data in the first region 410.

The operation of the activation state of the first region 410 and the second region 420 may be an operation of where the activation state of the first region 410 transitions to the activation state of the second region 420. In this case, the activation of the second region 420 may be performed after the activation state of the first region 410

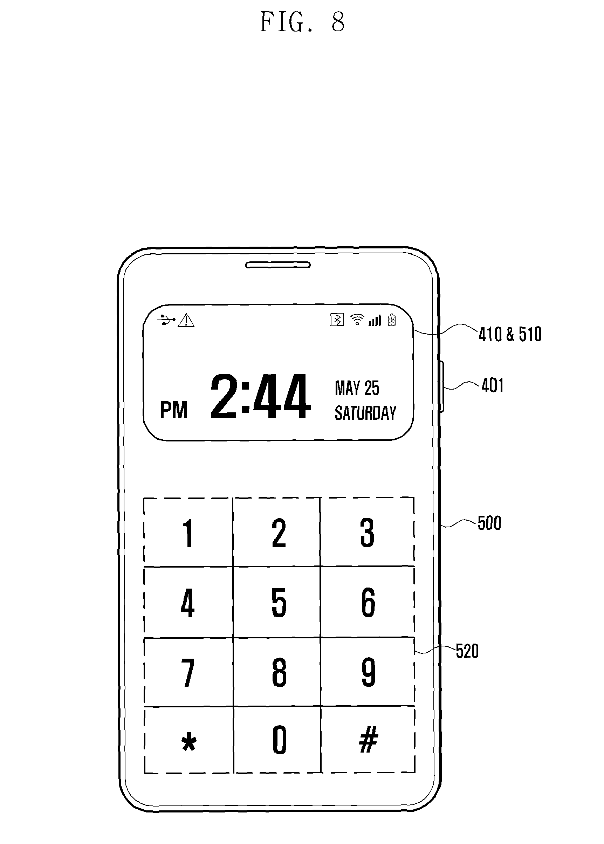

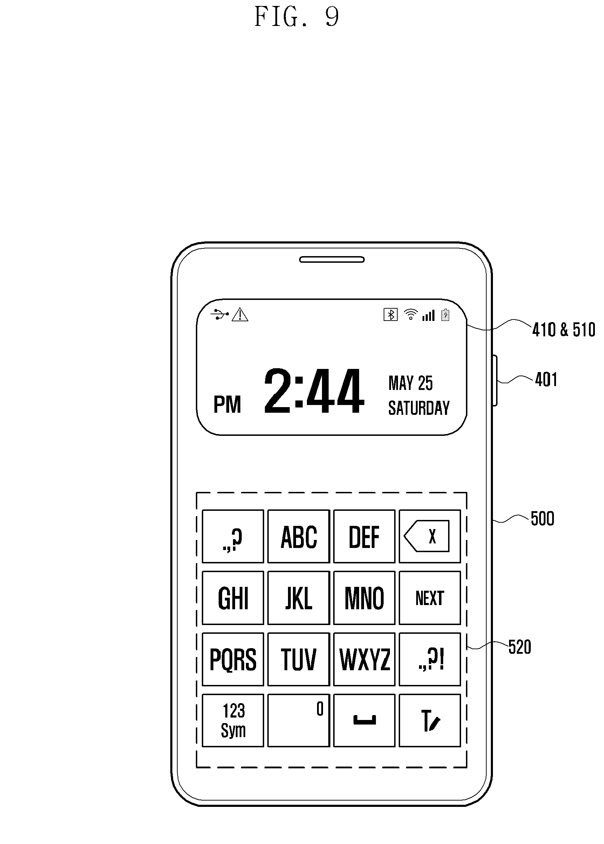

Various types of data may be displayed in the second region 420 when the second region 420 is activated. According to one embodiment, the operation of the activation state of the second region 320 may be an operation of activating the display 150 or all the input sensors of the input/output interface 140 to display data in the second region 420. The data displayed in the second region 420 will be described later with reference to FIGS. 8 and 9.

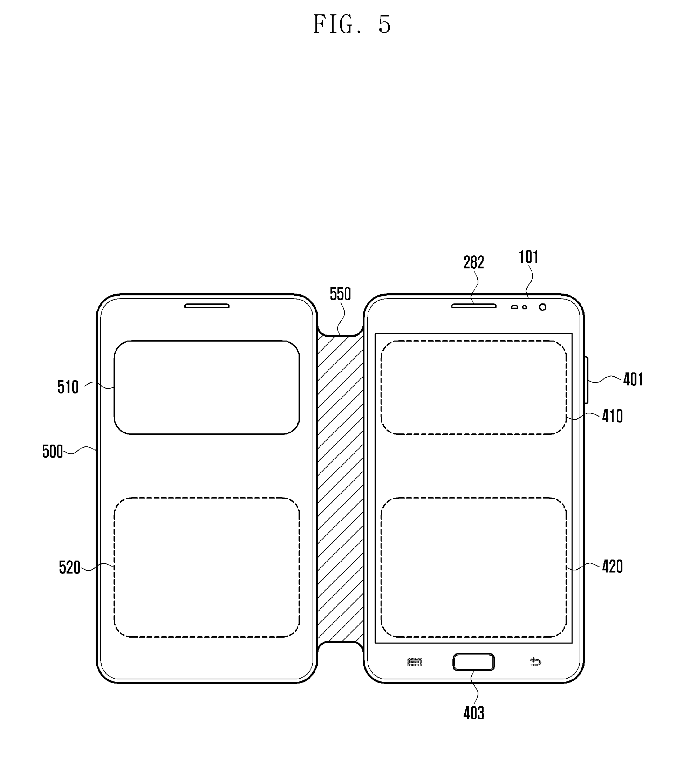

FIG. 5 illustrates an electronic device including a protective cover in an open state, according to an embodiment of the present disclosure.

Referring to FIG. 5, the electronic device 101 including a protective cover 500 is provided. The electronic device 101 includes a first region 410 and a second region 420 on the display 150. At least a portion of a protective cover 500 is configured to include a first protective cover region 510 and a second protective cover region 520. The first protective cover region 510 is arranged in a position corresponding to the first region 410 on the display 150 of the electronic device 101, wherein the first protective cover region 510 is formed of a transparent material. The second protective cover region 520 is arranged in a position corresponding to the second region 420 on the display 150, wherein the second protective cover region 520 is formed of a translucent or transparent material through which light can pass. When characters or numbers are displayed in the second region 420 of the display 150 in the electronic device 101, the user can see the characters or numbers through the second protective cover region 520 of the protective cover 500. The second protective cover region 520 may be configured in various colors. For example, if the second protective cover region 520 is pink, blue, or green in color, characters or numbers displayed in the second region 420 of the display 150 are displayed to have the same color as the color of the second protective cover region 520 by light passing through the second protective cover region 520 of the protective cover 500.

When the second region 420 of the display 150 is activated, the display 150 or the input sensors of the input/output interface 140 are activated so as to detect a user input in the second region 420.

The protective cover 500 includes a connection part 550, for connecting the front part and the rear part of the protective cover 500.

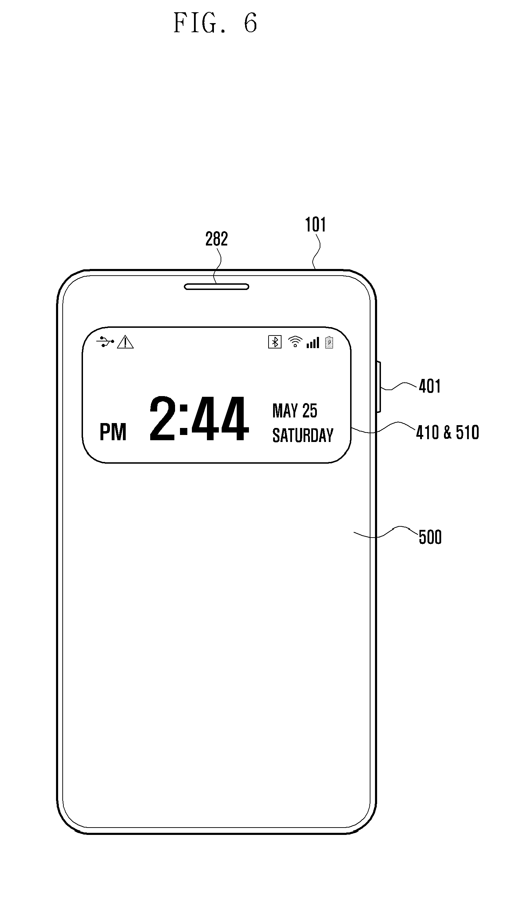

FIG. 6 illustrates an electronic device including a protective cover in a state in which data is displayed in a first region of a display of the electronic device, according to an embodiment of the present disclosure.

Referring to FIG. 6, an electronic device 101 including a protective cover 500 is provided. The protective cover 500 may be a type in which the protective cover 500 encloses the front side and rear side of the electronic device 101. In addition, the protective cover 500 may include the connection part 550 for connecting the front part and the rear part of the protective cover 500, as described in FIG. 5. For example, only a power key may protrude to the exterior and the volume control key may be concealed by the protective cover 500.

If an input is received via the power key 401 (hereinafter, a first input), the processor 120 reads out configured information and displays data in the first region 410 of the display 150. Although an input to the power key 401 is described as the first input, various input schemes, such as an input scheme using another key that protrudes to the exterior of the protective cover 500 or that the user can access without opening the protective cover 500 and an input scheme capable of receiving input by the user without opening the protective cover 500, may be used.

An operation of the first input may alternatively be performed using, for example, by detecting a specific sound based on voice recognition, by the rotation of the electronic device 101 at a predetermined acceleration/speed or more or by a predetermined angle or more, or by detecting a touch input in a predetermined region of the electronic device 101 in a state in which the protective cover is closed. The above-described forms of input may be independently used, two of more thereof may be combined, and other forms of input may be used. For example, if specific information for user authentication is received or if a specific control signal is received from the exterior, this may be interpreted as an operation corresponding to the first input. Those skilled in the art will easily recognize that various forms of input may be used as the first input.

In the following description, it is assumed that the first input is an input to a power key. The protective cover 500 includes the first protective cover region 510 of a transparent material that corresponds to the first region 410 of the display 150. The first protective cover region 510 allows data displayed in the first region 410 of the display 150 to be viewed by the user through the first protective cover region 510.Referring back to FIG. 3, the illustrated example of FIG. 6 corresponds to step 304. That is, in step 304, time information and/or information related to a basic operating state of the electronic device 101 may be displayed. The information related to the basic operating state of the electronic device 101 may be a reception/non-reception indication of a wireless communication signal, a battery charge level, a connection state with another electronic device, etc.

In step 306, the processor 120 checks whether a second input is detected. If the second input is detected, the processor 120 proceeds to step 308 and, if not, the processor 120 continues to perform the step 304. Alternatively, the processor 120 may return to step 300 if the second input is not detected before a preset time such as two or three seconds elapses, in a state in which the first region 410 of the display 150 is activated based on to the first input, and data is displayed in the first region 410.

If the second input is detected in step 306, the processor 120 proceeds to step 308 to activate the second region 420 of the display 150 or display data in the second region 420. Data to be displayed in the second region 420 may be a numeric keypad, a character keypad, various menus capable of being used in the electronic device 101 for screen transition, etc. For example, the various menus may be a dialing menu, a character input menu, a phone number search menu, a received text message confirmation menu, and/or the like. In this case, if it is difficult to display the various menus on one screen, two or more screens may be configured.

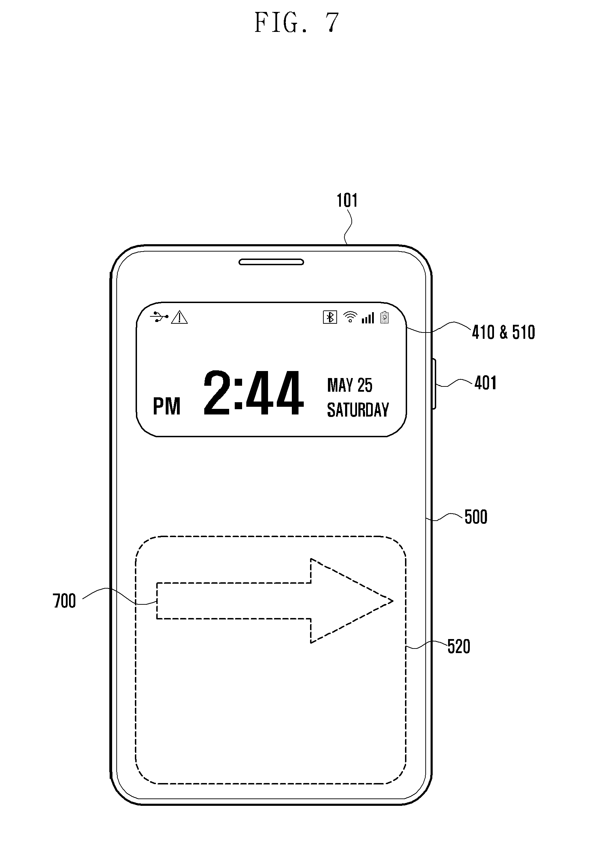

FIG. 7 illustrates a method of receiving a second input in an electronic device including a protective cover, according to an embodiment of the present disclosure.

Referring to FIG. 7, an electronic device 101 including a protective cover 500 in a closed state is provided. Since the first input has been detected in step 302, information related to the operating state of the electronic device 101 is displayed in the first region 410 of the display 150 of the electronic device 101. In this case, the second input may be a specific operation by the user recognized by a sensor on the display 150 of the electronic device 101. For example, as illustrated in FIG. 7, a movement operation, as indicated by reference number 700, using a finger, a portion of a body, or an electronic pen, in the second region 420 of the front side of the electronic device 101 may be the second input. The electronic device 101 recognizes the second input through a sensor corresponding to the second region 420 of the display 150.

The second input may be implemented in various ways. The second input 700 may be defined using various methods according to user convenience or information programmed in the electronic device 101. For example, movement in the direction opposite the direction shown in FIG. 7 may be the second input 700, a first or second touch operation in a relevant location may be the second input 700, a movement in a diagonal or vertical direction may be the second input 700, or a variety of other movements may be the second input 700. In this way, the second input 700 may be implemented in various forms according to user convenience or a scheme programmed in the electronic device 101. A program for defining the second input 700 in various forms may be included in a predetermined server or in the electronic device 101, and the electronic device 101 may access the program for configuring a corresponding operation and thus define the second input 700.

In FIG. 7, the processor 120 detects the second input 700 in the second protective cover region 520 of the protective cover 500, through a sensor included in the second region 420 of the electronic device 101. However, the same operation may, alternatively, be performed in the third region 430 or the first region 410 (through the first protective cover region 510). Additionally, the electronic device 101 may activate only an input sensor in the same location as the first region 410 of the display 150 and detect the same operation as the second input in a location corresponding to the first region 410.

Through the above-described operations, the processor 120 activates the second region 420 and displays data in the second region 420 in step 308. In a state in which the second region 420 is activated, the processor 120 proceeds to step 310 to check whether a third input is detected. If the third input is detected, the processor 120 proceeds to step 312 and, if not, the processor 129 continues to perform step 312. If the third input is not detected during a preset time period, the operation of FIG. 3 may be ended.

The third input may be performed in various forms. For example, the processor 120 may configure a dialing menu, a character input menu for an outgoing text message, and/or a voice recording menu in the second region 420 and display the configured menus on one page of the second region 420. The menus displayed in the second region 420 may be seen by the user through the second protective cover region 520 of the cover 500 because the second protective cover region 520 is comprised of a translucent or transparent material.

If all the menus cannot be displayed on one page, the processor 120 may configure menus such as a received text message confirmation menu and a phone number search menu on another screen. Therefore, the processor 120 may detect a screen transition request or a screen movement request as well as a selection of menus (icons for performing specific applications) during detection of the third input.

For example, the processor 120 may detect a screen transition or a screen movement using the operation in the same or an opposite direction as reference number 700 shown in FIG. 7.

If the screen transition input is detected, the processor 120 changes the data displayed in the second region 420 of the display 150. The screen transition may include not only transition of a specific menu or icon but also transition between specific applications. For example, transition between specific applications may change an input state between two applications. Assuming that the two applications are a character input application and a dialing application, then the character input application and the dialing application may transition based on the screen transition input.

FIGs. 8 and 9 illustrate a method of operating an electronic device including a protective cover in a state in which a second region of a display is activated when the protective cover is closed, according to an embodiment of the present disclosure.

Referring to FIGs. 8 and 9, an electronic device 101 including a protective cover 500 is provided.

As shown in FIG. 8, the second region 420 of the display 150 of the electronic device 101 is activated to display a numeric keypad when the protective cover 500 is closed on the electronic device 101. Since the second protective cover region 520 of the protective cover 500 is formed of a material through which light passes (e.g., a translucent or transparent material), data displayed in the second region 420 of the display 150 may be viewed through the second protective cover region 520.

As shown in FIG. 9, the second region 420 of the display 150 of the electronic device 101 is activated to display an English alphabet keypad when the protective cover 500 is closed on the electronic device 101. Since the second protective cover region 520 of the protective cover 500 is formed of a material through which light passes, data displayed in the second region 420 of the display 150 may be viewed through the second protective cover region 520.

FIGS. 8 and 9 illustrate screens that transition to each other. For example, if the second input 700 is detected, the processor 120 may display data illustrated in FIG. 8 or FIG. 9 in the second region 420 in a state in which the protective cover 500 is closed. The displayed data may be numeric keys for dialing, as illustrated in FIG. 8, or may be keys for character input, as illustrated in FIG. 9. For example, if the second input 700 is detected for the first time, the processor 120 may display the first screen of FIG. 8, if the second input 700 is detected for the second time, the processor 120 may transition to the screen of FIG. 9, and if the second input 700 is detected for the third time, the processor 120 may transition back to the screen of FIG. 8.

The second input may be a touch operation that is input at a corresponding location or may be a movement. For example, a first or second touch operation may be the second input or a movement in a predefined direction may be the second input.

Various screens according to the application 134 may be displayed in addition to the screen of FIG. 8 or 9 according to the second input.

For example, for a text message application, transition to a screen for Hangul input may be performed and, for a phone call application, transition to a screen corresponding to an operation configured for phone number search may be performed.

Additionally, screen transition may be the case of sequentially displaying various menus. For example, the first displayed data in the second region 420 of the display 150 may be a dialing menu. Next, if the second input 700 is sequentially detected, as illustrated in FIG. 7, menus may sequentially change. For example, the menus may be displayed in order of dialing menu -> character input menu -> phone number search menu -> text message confirmation menu. After the text message conformation menu, if the second input is performed in the same direction, the dialing menu may be displayed. Those skilled in the art may easily recognize that two or more menus may be displayed on one screen.

A selection operation among the operations of the third input may be detected through touch of a menu as described above. For example, dialing input selection or character input selection may be performed by selecting specific numbers or characters shown in FIG. 8 or 9.

After the second input 700 is performed, the processor 120 checks whether a dialing operation is requested via the input/output interface 140 located in the second region 420. If the dialing operation is requested, the processor 120 performs an outgoing call operation, i.e., an operation for performing dialing. This operation may be an operation of making a phone call to a specific counterpart. For example, this operation may be one in which input is received in a region corresponding to numeric keys through the second protective cover region 520 shown in FIG. 8.

For example, the processor 120 controls displaying a numeric keypad for inputting a phone number in the second region 420 of the display 150 and detects an input of the user using input sensors of the input/output interface 140 at a location corresponding to the second region 420. If the user selects a specific number, the processor 120 displays the selected number in the first region 410 of the display 150.

Accordingly, the user may input numbers located in the second region 420 of the display 150 through the second protective cover region 520 in a state in which the protective cover 500 is closed. Additionally, user may confirm the numbers displayed in the first region 410 of the display 150 through the first protective cover region 510, in a state in which the protective cover 500 is closed.

After the second input 700 is performed, the processor 120 checks whether a character input operation is requested via the input sensors of the input/output interface 140 located in the second region 420. If the character input operation is requested, the processor 120 performs an operation for an outgoing text message, i.e. an SMS, an MMS, or instant messenger communication. This may be an operation for transmitting a specific text message to a specific counterpart.

For example, the processor 120 displays a character keypad for inputting characters in the second region 420 of the display 150 and detects user input using the input sensors of the input/output interface 140 at a location corresponding to the second region 420 of the display 150. If the user selects specific characters, the processor 120 displays the selected characters in the first region 410 of the display 150.

Accordingly, the user may input characters located in the second region 420 of the display 150 through the second protective cover region 520 in a state in which the protective cover 500 is closed. Additionally, the user may confirm the characters displayed in the first region 410 of the display 150 through the first protective cover region 510, in a state in which the protective cover 500 is closed.

After the second input 700 is performed, the processor 120 checks whether a phone number search operation is requested via the input sensors of the input/output interface 140 located in the second region 420. If the phone number search operation is requested, the processor 120 performs an operation of searching for a phone number. During the phone number search operation, the processor 120 executes an application for phone number search.

When the user searches for a phone number, the processor 120 displays an up/down/left/right movement menu or a keypad for inputting names or numbers in the second region 420 of the display 150 and detects a user input using the input sensors of the input/output interface 140 in the location as the second region 420. If the user selects a specific key, for example, the up/down/left/right movement key, a name, or a phone number, the processor 120 displays the name or the name and the phone number in the first region 410 of the display 150 in response to the detected input information.

Accordingly, the user may input numbers located in the second region 420 of the display 150 through the second protective cover region 520 in a state in which the protective cover 500 is closed. Additionally, the user may confirm a name or a name and a phone number in the first region 410 of the display 150 through the first protective cover region 510 in a state in which the protective cover 500 is closed

After the second input 700 is performed, the processor 210 checks whether a text message confirmation operation is requested via the input sensors of the input/output interface 140 located in the second region 420. If the text message confirmation operation is requested, the processor 210 performs an operation for text message confirmation. This operation is performed to confirm a text message received from a specific counterpart through an application program, such as an SMS, an MMS, or an instant messenger application.

The processor 120 may display an up/down/left/right movement menu or a keypad for inputting names or numbers in the second region 420 of the display 150 and detects user input using the input sensors of the input/output interface 140 located in the same location as the second region 420.

Accordingly, if the user selects a specific key, the processor 120 displays selected items, for example, a person's name in a chat, a chat room, or a phone number, in the first region 410 of the display 150. Additionally, the user may confirm characters displayed in the first region 410 of the display 150, for example, a person's name in chat, a chat room, or a phone number through the first protective cover region 510 in a state in which the protective cover 500 is closed.

After the second input 700 is performed, the processor 210 checks whether a preset time elapses. This operation is performed to check whether the time for releasing the activation mode of the first region 410 and/or the second region 420 of the display 150 has elapsed. For example, if no input is detected from the input sensors of the input/output interface 140 located in the second region 420 of the display 150 during a specific time period such as three or five seconds, the processor 120 transitions to a standby state. As an example, if no input is detected for a preset time, the processor 120 releases the activation mode of the first region 410 or second region 420 or transitions to the standby state. For example, the lapse of the preset time may be configured to reset a time counter value whenever a specific input is detected. Therefore, if no input is detected before the preset time elapses, unnecessary power consumption can be prevented.

Hereinabove, operations capable of being performed when the activation state of the first region 410 transitions to the activation state of the second region 420 of the display 150 has been described. Operations other than the above-described operations of FIGs. 8 and 9 may be configured to be performed using the same method as described above. For example, various modified embodiments of operations other than the operations of FIGs. 8 and 9, such as simple note and scheduling input may be implemented.

A display control method in an electronic device including a cover according to various embodiments of the present disclosure may include determining whether the cover is placed on or over the display upon detecting an input, and displaying data corresponding to the input through at least one of a first region of the display corresponding to a first visual region of the cover and a second region of the display corresponding to a second visual region of the cover when the cover is placed on or over the display.

According to an embodiment of the present disclosure, the first display region may be a transparent region and the second display region may be a translucent region.

According to an embodiment of the present disclosure, the method may further include activating an input/output interface of the electronic device for further acquiring another input upon displaying the data on the display.

According to an embodiment of the present disclosure, the method may further include displaying data based on another acquired input in the second region of the display upon further acquiring another input.

According to an embodiment of the present disclosure, the method may further include displaying information corresponding to selected data in the first region when at least one of the data items displayed in the second region is selected.

According to an embodiment of the present disclosure, the other input may be input using at least one of: touch, hovering, a pen, and touch and drag.

According to an embodiment of the present disclosure, the method may further include activating the first region of the display upon displaying the data corresponding to the input in the first region.

According to an embodiment of the present disclosure, the method may further include changing and then displaying the data displayed in the second region upon detecting screen transition input in a state in which the data corresponding to the input is displayed in the second region.

According to an embodiment of the present disclosure, the data displayed in the second region may include at least one of display data for an outgoing call operation, display data for a text message transmission operation, display data for a phone number search operation, display data for a text message confirmation operation, display data for a scheduling management operation, and display data for an application execution icon or note input operation.

According to an embodiment of the present disclosure, the method may further include deactivating the display when detecting no input during a preset time period in a state in which the data is displayed in the second region on the display.

An input method and apparatus of an electronic device including a protective cover according to an embodiment of the present disclosure enables the user to use various functions of the electronic device, increases user convenience, and reduces power consumption of the electronic device.

According to various embodiments, at least some of the devices (e.g., modules or functions thereof) or the method (e.g., operations) of the present disclosure may be implemented by a command stored in a computer-readable storage medium in a programming module form. When the command is executed by one or more processors (e.g., the processor 210), the one or more processors may execute a function corresponding to the command. The computer-readable storage medium may be, for example, the memory 220. At least a part of the programming module may be implemented (e.g., executed) by, for example, the processor 210. At least a part of the programming module may include, for example, a module, a program, a routine, a set of instructions, and/or a process for performing one or more functions.

The computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media, such as a floptical disc, and hardware devices specially configured to store and perform a program instruction (e.g., a programming module), such as a Read Only Memory (ROM), a Random Access Memory (RAM), a flash memory, etc. In addition, the program instructions may include high level language codes, which can be executed by a computer using an interpreter, as well as machine code generated by a compiler. The aforementioned hardware device may be configured to operate as one or more software modules in order to perform the operation of various embodiments of the present disclosure, and vice versa.

The programming modules according to the present disclosure may include one or more elements among the above-described elements, exclude some of them, or further include other elements. The operations performed by the modules, the programming modules, or other elements according to the various embodiments of the present disclosure may be executed through a sequential, parallel, repeated, or heuristic method. In addition, a few operations may be executed in a different order, may be omitted, or may additionally include other operations.

Various embodiments of the present disclosure disclosed in this specification and the drawings have been shown and described for the purpose of illustration without limiting the subject matter of the present disclosure. Therefore, it should be construed that, in addition to the embodiments disclosed herein, all modifications and changes or modified and changed forms derived from the technical idea of the present disclosure fall within the scope of the present disclosure. Accordingly, the scope of the present disclosure is defined not by the detailed description of the present disclosure, but by the appended claims and their equivalents, and thus, all differences within the scope will be construed as being included in the present disclosure.

## Claims

1. An electronic device, comprising:
a display;
a memory for storing data; and
a processor functionally connected to the display and the memory,
wherein the processor
is configured to detect a first input,
is configured to determine whether a cover for the electronic device is covered on the display when the first input is detected, wherein the cover includes a first visual region and a second visual region, and
is configured to display first data corresponding to the first input through at least one of a first region and a second region of the display when the cover covers the display, wherein the first region is arranged in a location corresponding to the first visual region and the second region is arranged in a location corresponding to the second visual region.

2. The electronic device of claim 1, wherein the first visual region is a transparent region and the second visual region is a translucent region.

3. The electronic device of claim 1, wherein the processor is configured to control activating an input/output interface for detecting a second input upon displaying the first data.

4. The electronic device of claim 3, wherein the processor is configured to control displaying second data in the second region upon detecting the second input.

5. The electronic device of claim 4, wherein the processor is configured to control displaying information, corresponding to selected second data, in the first region when at least one of the second data displayed in the second region is selected.

6. The electronic device of claim 3, wherein the second input is at least one of a touch input, a hovering input, a pen input, and touch and drag input.

7. The electronic device of claim 1, wherein the processor is configured to display third data in the second region upon detecting a screen transition input in a state in which the second data corresponding to the second input is displayed in the second region,
wherein the second data displayed in the second region includes at least one of display data for an outgoing call operation, display data for a text message transmission operation, display data for a phone number search operation, display data for a text message confirmation operation, display data for a scheduling management operation, and display data for an application execution icon or note input operation,
wherein the processor is configured to control deactivating the display when no input is detected during a preset time period in a state in which the second data is displayed in the second region.

8. A display control method in an electronic device including a cover, the method comprising:
determining whether the cover is covered on a display of the electronic device when a first input is detected; and
displaying first data corresponding to the first input through at least one of a first region of the display corresponding to a first visual region of the cover and a second region of the display corresponding to a second visual region of the cover when the cover covers the display.

9. The display control method of claim 8, wherein the first visual region is a transparent region and the second visual region is a translucent region.

10. The display control method of claim 8, further detecting a second input upon displaying the first data.

11. The display control method of claim 10, further comprising displaying second data based in the second region upon detecting the second input.

12. The display control method of claim 11, further comprising displaying information, corresponding to selected second data, in the first region when at least one of the second data displayed in the second region is selected.

13. The display control method of claim 10, wherein the second input is at least one of: a touch input, a hovering input, a pen input, and a touch and drag input.

14. The display control method of claim 8, further comprising activating the first region upon displaying the first data corresponding to the first input in the first region.

15. The display control method of claim 11, further comprising displaying third data in the second region upon detecting a screen transition input in a state in which the second data corresponding to the input is displayed in the second region; and
deactivating the display when no input is detected during a preset time period in a state in which the second data is displayed in the second region.
wherein the second data displayed in the second region includes at least one of display data for an outgoing call operation, display data for a text message transmission operation, display data for a phone number search operation, display data for a text message confirmation operation, display data for a scheduling management operation, and display data for an application execution icon or note input operation.
